# EUROPEAN PATENT SPECIFICATION

(11) **EP 1 286 404 B1**
(45) Date of publication and mention of the grant of the patent: **28.05.2008**
(21) Application number: 02018142.6
(22) Date of filing: 14.08.2002
(51) Int. Cl.: H01M 8/02, H01M 8/04

(54) **Fuel cell**
Brennstoffzelle
Pile à combustible

(30) Priority: 21.08.2001 JP 2001250861; 18.10.2001 JP 2001321180; 28.02.2002 JP 2002054839
(43) Date of publication of application: 26.02.2003
(73) Proprietor: Kabushiki Kaisha Equos Research, Tokyo-to (JP)
(72) Inventor: Horiguchi, Munehisa, Toyota, Aichi (JP); Kato, Hidemi, Sapporo, Hokkaido (JP); Ueno, Masataka, Susono-shi, Shizuoka (JP)
(74) Representative: Vossius & Partner

(56) References cited:
- WO-A-02/059992
- US-A- 6 051 331
- PATENT ABSTRACTS OF JAPAN vol. 018, no. 681 (E-1649), 21 December 1994 (1994-12-21) & JP 06 275284 A (MITSUBISHI HEAVY IND LTD), 30 September 1994 (1994-09-30)
- PATENT ABSTRACTS OF JAPAN vol. 1998, no. 14, 31 December 1998 (1998-12-31) & JP 10 247505 A (FUJI ELECTRIC CO LTD), 14 September 1998 (1998-09-14)
- PATENT ABSTRACTS OF JAPAN vol. 1995, no. 03, 28 April 1995 (1995-04-28) & JP 06 338338 A (MITSUBISHI HEAVY IND LTD), 6 December 1994 (1994-12-06)

## Description

The present invention relates to a fuel cell, particularly to a cooling technology of the fuel cell using a separator interposed between unit cells.

A unit cell of a PEM-type fuel cell as one format of a fuel cell is composed of an anode (referred to as a hydrogen electrode since hydrogen gas is generally used as a fuel), an oxidant electrode (hereinafter referred to as a cathode since air of gas including oxygen is similarly used as oxidant), and a solid polymer electrolyte membrane interposed therebetween. Both anode and cathode are composed of catalyst layers, which include catalytic substances, and electrode substrates, which function as to support the catalyst layer and to transmit reaction gas and further function as a current collector. Further, on the outside of the anode and the cathode, layered is a separator (connector plate) that uniformly supplies an electrode surface with hydrogen and air as reaction gas from the outside of a cell and that is provided with a gas pass (generally structured with a groove with an electrode surface side open) for discharging excessive reaction gas to the outside of the cell. This separator prevents gas transmission and collects current in order to take out the generated current to the outside. The above-described unit cell and the separator compose one unit of an electric cell.

In an actual fuel cell, a plurality of the related electric cells are layered in series to compose a stack. In such a fuel cell, it is necessary to keep the solid polymer electrolyte membrane in the unit cell in a fully moist state in order to maintain enough power generation efficiency. Generally, water only generated by an electrolytic reaction is not enough so that a means for supplying humidification water to each unit cell is required. In addition, a substantially equal quantity of heat to a generated power is generated by the electrolytic reaction, so that a cooling means for preventing the fuel cell itself from overly being heated up is figured out.

As a cooling means for the fuel cell, various means are proposed such as a means for cooling and also wetting the solid polymer electrolyte membrane. For example, in JP-A- 10-247505, such a structure is employed that air to which water is previously added is supplied and the water is evaporated at a cooling gas pass for cooling, to thereafter circulate the air that includes the evaporated moisture in an air pass.

Further proposed is that a hollow portion apart from the gas pass is formed in the separator to pass the cooling water through the hollow portion and this cooling water supplies the air pass with vapor through a porous wall surface (refer to JP-A- 6-338338).

According to prior arts, it is difficult to maintain both cooling and wetting of the membrane. For example, according to JP-A- 10-247505, for re-circulating the air that includes vapor generated by once evaporating liquid water at the cooling gas pass, it is difficult to maintain temperature of the cooling gas pass in the circulation path. For example, when temperature increases in the air pass after the temperature decreases in the circulation path, the moisture is taken out from the electrolyte membrane in the air pass, which makes it difficult to maintain wetting of the membrane.

In JP-A- 6-338338, though the vapor is supplied through the porous wall surface, enough vapor is not necessarily supplied by the moisture seeping from the porous wall surface, and in the cooling water pass, cooling is performed only by sensible heat so that enormous mechanical equipment and energy for circulating the cooling water may be required for complete cooling.

The present invention is proposed in light of the above-described circumstances and an object thereof is to maintain both cooling and wetting of a membrane. Further, the present invention is to provide a fuel cell that enables efficient cooling without having the fuel cell large-sized.

As described in claim 1, the above-described object is achieved by having a fuel cell with such a structure as to comprise a plurality of unit cells each including an anode and a cathode and a plurality of separators each arranged between the unit cells, wherein the separator comprises an air pass on a front face side thereof at least being in contact with the cathode of the unit cell and a cooling space supplied with air and water on a back face side thereof, the air pass and the cooling space communicating through a through-hole passing through the separator so as to cool the unit cells by latent heat of water evaporated in the cooling space and to supply the air pass with vapor through the through-hole.

As described in claim 2, in the above-described structure, it is advantageous to have such a structure that the cooling space is included within the separator and arranged adjacent to the air pass.

As described in claim 3, in the above-described structure, it is further advantageous to have such a structure that the separator is made of a pressed plate material, a space between lifted portions protruded from a plate surface serves as the air pass, and a space on a back side of the lifted portions serves as the cooling space.

As described in claim 4, in the above-described structure, it is further advantageous to have such a structure that a wall surface surrounding the cooling space of the separator is applied with a hydrophilic process at least on a portion thereof.

As described in claim 5, in the above-described structure, such a structure may be employed that the air pass has a pass, one end of which is closed, and is communicated with the cooling space by the through-holes along the way from the closing end to an open end thereof.

As described in claim 6, in the above-described structure, such a structure may be employed that the separator has a structure in which a smaller amount of liquid water is supplied to the air pass than to the cooling space.

As described in claim 7, in the above-described structure, such a structure may be employed that the cooling space on an inlet side is connected to a manihold supplying air and water, while an outlet side thereon serves as an open pass.

As described in claim 8, in the above-described structure, it is advantageous that the separator is made of metal.

As described in claim 9, in the above-described structure, it is advantageous to have such a structure that the separator is structured by having a plurality of plate materials abut on each other on at least a part thereof, while the cooling space is structured by an opening caused between the abutting portions.

As described in claim 10, in the above-described structure, it is advantageous that the separator is made of stainless steel.

Next, as described in claim 11, the present invention is characterized in a fuel cell, comprising a plurality of unit cells each including an anode and a cathode and a plurality of separators each arranged between the unit cells, wherein the separator comprises an air pass on a front face side thereof at least being in contact with a cathode of the unit cell and a cooling space on a back face side thereof, and air and water are supplied to the air pass and the cooling space to cool the unit cell in the cooling space and the air pass by latent heat generated when the supplied water evaporates.

As described in claim 12, in the above-described structure, it is advantageous to have such a structure that the air pass and the cooling space on inlet sides thereof are connected to the same manihold and are supplied with air and water from the manihold.

As described in claim 13, in the above-described structure, it is advantageous that the separator is made of stainless steel.

As described in claim 14, in the above-described structure, it is advantageous to have such a structure that the separator is structured by having a plurality of plate materials abut on each other on at least a part thereof, while the cooling space is structured by an opening caused between the abutting portions.

As described in claim 15, in the above-described structure, it is advantageous that the separator is made of stainless steel.

In the structure described in claim 1, heat generated by electrolytic reaction is transmitted from the unit cell to the separator and it evaporates water in the cooling space to cool the separator with its latent heat, which results in cooling the unit cell via the separator. Due to this operation, the unit cell can be cooled without supplying the air pass with water in a droplet state. In addition, vapor generated by evaporation in the cooling space is spouted from the through-hole to the air pass and then supplied to and absorbed by the unit cell abutting on the air pass, which results in adding water to the unit cell.

Next, in the structure described in claim 2, evaporative latent heat of water evaporated in the cooling space also cools the air pass adjacent to the cooling space, so that fluid flowing through the air pass is cooled and this cooling effect indirectly operates to cool the unit cell. This results in exercising the cooling effect not only on a part where the unit cell abuts on the cooling space but also on a part where it abuts on the air pass, and thus the unit cell is uniformly cooled.

Next, in the structure described in claim 3, a wall surrounding the cooling space and a wall separating the air pass and the cooling space are both made thin, so that also by cooling the unit cell via the wall of the separator, latent heat cooling caused by water evaporation in the cooling space effectively operates on cooling the unit cell.

Further, when employing the structure described in claim 4, droplets easily adhere to the wall of the separator surrounding the cooling space, so that direct heat transmission from the wall to the droplets is performed on a wide surface, which further facilitates water evaporation in the cooling space.

When employing the structure described in claim 5, water does not enter the air pass in a droplet state, so that the water is supplied to the air pass only in a vapor state. Thereby, air supply to the air pass is also smoothly performed without being intervened by the droplets.

When employing the structure described in claim 6, a small amount of liquid water enters the air pass, so that a possibility of the water entering in a droplet state is lowered. Thereby, air supply to the air pass is smoothly performed without being intervened by the droplets.

When employing the structure described in claim 7, air and water can be continuously supplied to the cooling space and the heated air and water can be continuously discharged therefrom, so that cooling effect by the cooling space is further improved.

When employing the structure described in claim 8, thin and high-corrosion resistance separator is composed.

When employing the structure described in claim 9, the cooling spaces are structured between metal plate materials in such a form as running through portions where the metal plate materials alternately abut on each other, without causing any invalid spaces.

When employing the structure described in claim 10, thin and high-corrosion resistance separator is composed.

Next, when employing the structure described in claim 11, heat generated by the electrolytic reaction is transmitted from the unit cell to the metal separator and it evaporates water in the cooling space to cool the separator with its latent heat, which results in cooling the unit cell via the metal separator. This operation can cool the unit cell.

When employing the structure described in claim 12, necessary air and water are supplied to the air pass and the cooling space from the same manihold.

When employing the structure described in claim 13, thin and high-corrosion resistance separator is composed.

When employing the structure described in claim 14, the cooling spaces are structured between metal plate materials in such a form as running through portions where the metal plate materials alternately abut on each other, without causing any invalid spaces.

When employing the structure described in claim 15, thin and high-corrosion resistance separator is composed.
Hereinafter, embodiments of the present invention will be explained with reference to the drawings.
FIG. 1 is a partial horizontal sectional view of an electric cell composing a fuel cell according to a first embodiment of the present invention;
FIG. 2 is a sectional view of a unit cell composing the electric cell;
FIG. 3 is an exploded perspective view of a separator composing the electric cell of the first embodiment;
FIG. 4 is a partial top view of a fuel cell stack in which the electric cells of the first embodiment are layered;
FIG. 5 is a schematic view showing a cooling mechanism by the separator in the first embodiment;
FIG. 6 is a block diagram of a fuel cell system;
FIG. 7 is the whole front view of a separator composing a fuel cell according to a second embodiment of the present invention;
FIG. 8 is a partial horizontal view of a fuel cell stack of the second embodiment;
FIG. 9 is a B-B vertical sectional view of FIG. 8;
FIG. 10 is a C-C vertical sectional view of FIG. 8;
FIG. 11 is the whole rear view of the separator of the second embodiment;
FIG. 12 is a partial top view of the fuel cell stack of the second embodiment;
FIG. 13 is a front view showing a modification embodiment of the separator of the second embodiment;
FIG. 14 is a side sectional-view of a fuel cell unit composing a fuel cell of a third embodiment of the present invention;
FIG. 15 is a partial horizontal sectional view of a separator of the fuel cell of the third embodiment;
FIG. 16 is the whole front view of the separator of the fuel cell of the third embodiment;
FIG. 17 is a partial enlarged view of the separator of the fuel cell of the third embodiment;

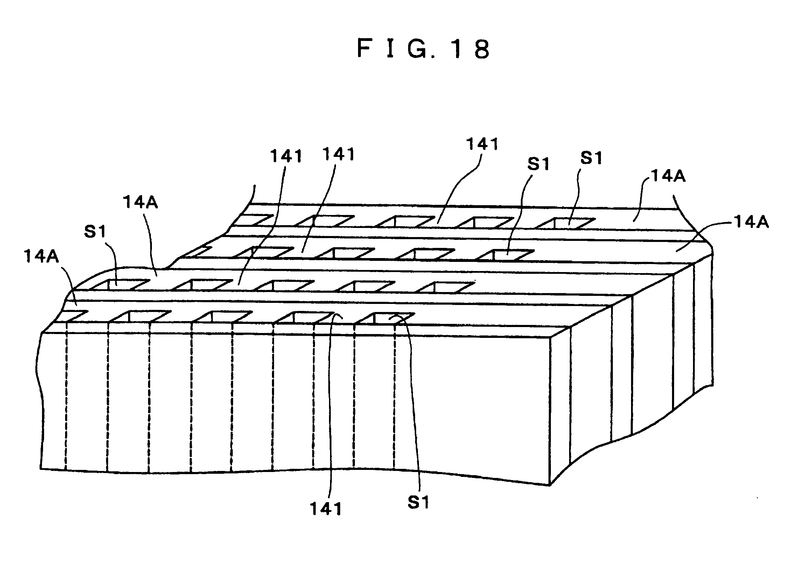

FIG. 18 is a partial enlarged perspective view of a fuel cell stack of the third embodiment;
FIG. 19 is the whole front view of a fuel cell separator of a modification embodiment in the third embodiment;
FIG. 20 is a partial horizontal sectional-view of a fuel cell separator in another modification embodiment;
FIG. 21 is a partial horizontal sectional-view of a fuel cell separator in still another modification embodiment;
FIG. 22 is a partial horizontal sectional-view of a fuel cell separator in yet another modification embodiment;
FIG. 23 is a partial horizontal sectional-view of a fuel cell separator in yet another modification embodiment, and
FIG. 24 is a block diagram of a fuel cell system of the third embodiment.

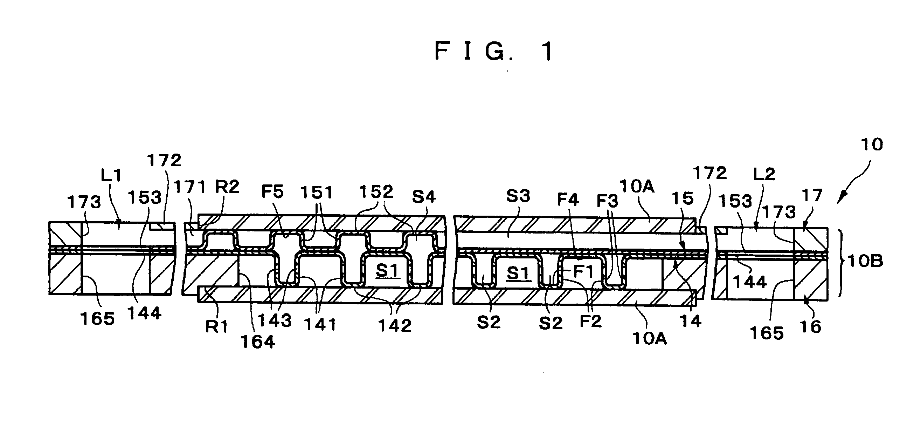

First, FIG. 1 to FIG. 6 show a first embodiment of the present invention. FIG. 1 is a cross sectional view (hereinafter, a relationship between length and breadth will be explained depending on a posture of an electric cell arrangement) showing a structure of an electric cell 10 as a unit composing a fuel cell stack. As shown in FIG. 1, this electric cell has a structure, in which a separator 10B comprising current collectors 14, 15 and frame members 16, 17 is arranged between the unit cells 10A being adjacent to each other.

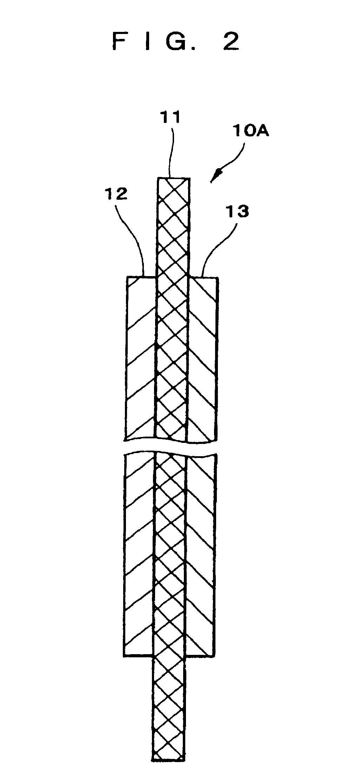

As its enlarged cross-sectional structure is shown in FIG. 2, the unit cell 10A is composed of a solid polymer electrolyte membrane 11 interposed between a cathode 12, which is an oxidant electrode, stacked on one side thereof and an anode 13 stacked on another side thereof. The cathode 12 and the anode 13 have the size corresponding to housing portions R1, R2 that are formed in the separator 10B in FIG. 1, while the solid polymer electrolyte membrane 11 has the size slightly larger than the housing portions R1, R2. Since thickness of the unit cell 10A, especially that of the solid polymer electrolyte membrane 11, is extremely thin compared to thickness of the current collectors 14, 15 and the frame members 16, 17 which compose the separator 10B, an outer shape of the unit cell 10A is shown by the size of the cathode 12 and the anode 13 in other figures except FIG. 2 to present the unit cell 10A as a unit member.

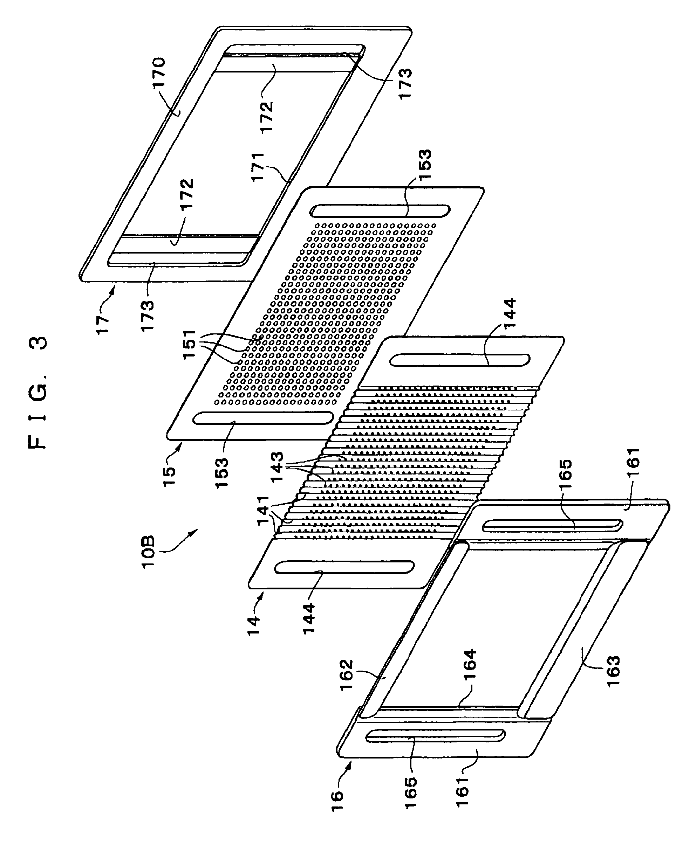

The separator 10B, as exploded in FIG. 3, comprises the current collectors 14, 15 that compose a pair to take out electric current to outside by coming into contact with the cathode 12 and the anode 13 of the unit cell 10A, and the frame members 16, 17 that are stacked thereon to support the unit cell 10A. In this embodiment, the current collectors 14, 15 are made of thin metal plates having a plate thickness of, for example, about 0.1 mm. This constituent metal is a metal having electric conductivity and corrosion resistance, such as stainless steel, a nickel alloy, and a titanium alloy with a corrosion-resistant electric conductivity process applied.

One electric collector 14, which is made of a horizontal and rectangular plate material, is protruded by presswork to form a plurality of lifted portions 141. These lifted portions 141 are arranged successively in linear-shapes with each thereof being parallel to a longitudinal side (a short edge side in the embodiment shown in FIG. 3) of the plate material, and the lifted portions 141 are arranged at even intervals to thoroughly travel the length of the plate surface. Although cross-sectional shapes of the lifted portions 141 are roughly described in FIG. 1 as a cross section with a rectangular and wavy shape for convenience, it is more realistic to have such a shape as slightly bottom-broadening at a root side. Groove-shaped spaces S1, which are defined between these lifted portions 141 to have a side facing the cathode 12 (refer to FIG. 2) of the unit cell 10A unfolded, are used as air passes to pass air to the cathode 12 side, which will be detailed later. A plane surface of a top portion 142 of each lifted portion 141 is an abutting portion where the cathode 12 abuts thereon. Groove-shaped spaces S2 defined on back side of the lifted portions 141 are used as cooling spaces (passes in this embodiment), which will be also detailed later. Further, in order to partially communicate between the air pass S1 and the cooling spaces S2, a plurality of through-holes 143 are formed to penetrate the current collector 14. These through-holes 143 may be arranged in any position, but it is normal to arrange them on both sides of the lifted portions 141. Further, oblong holes 144 elongated in a longitudinal direction are formed in a vicinity of both ends of the current collector 14 in a horizontal edge direction (a long edge side in the embodiment shown in FIG. 3). When the current collector 14 is stacked with the current collector 15 and the frame members 16, 17, and the separators 10B are layered, these oblong holes 144 constitute hydrogen passes L1, L2 which pass through each of the members that are integrated.

Another current collector 15, which is made of the horizontal and rectangular plate material corresponding to the current collector 14, is protruded to form a plurality of lifted portions 151 by the presswork. Although the lifted portions 151 have their top potions 152 flat, and a cross-sectional shape thereof also has practically the rectangular and wavy shape similar to the prior lifted portions 141, the lifted portions 151 in this embodiment are provided intermittently in a longitudinal direction. Specifically, the lifted portions 151 are formed into circular or rectangular protrusions in which an arranging pitch thereof in a horizontal direction (long edge direction) is aligned with the arranging pitch of the lifted portions 141 and the arranging pitch in a longitudinal direction (short edge direction) is set at a proper interval. A cross section of the left half in FIG. 1 shows a cut surface at an arranging portion of the lifted portions 151, while the cross section of the right half thereof shows a cut surface between the arranging portions. A space S3 vertically and horizontally formed between these lifted portions 151 constitutes a plane space of which a side facing on the anode 13 (refer to FIG. 2) of the unit cell 10A is unfolded, and it serves as a hydrogen pass though which hydrogen, namely fuel, is passed. A plane surface of a top portion 152 of each lifted portion 151 is an abutting portion where the anode 13 abuts thereon. On back of the lifted portions 151, formed is a short cylindrical space S4 of which a side facing the current collector 14 is unfolded to merge with the space S2 of the current collector 14, so that as a consequence, both ends are structured to have opening portions which open to the long edge portions of the plate material through the cooling space S2. Similarly to the current collector 14, oblong holes 153 elongated in a short edge side direction is formed in a vicinity of both ends of the current collector 15 in a long edge side direction. When the current collectors 14, 15 and the frame members 16, 17 are stacked and the separators 10B are layered, these oblong holes 153 constitute hydrogen passes L1, L2 which pass through each of the members that are integrated. In this embodiment, the lifted portions 151 take columnar shapes, each of which intermittently abuts on the anode 13 with its small area. This causes to vertically and horizontally form the hydrogen pass S3 that runs between the columnar lifted portions 151, and to prevent hydrogen gas flow from being retained and stagnant. This also allows that an area of the anode 13 which the hydrogen gas comes into contact with becomes big, which may improve power generation efficiency.

The thus-structured current collectors 14, 15 are stacked to be fixed so that both of the respective lifted portions 141, 151 face outside. Here, a plate surface portion where the lifted portions 141 and 151 are not formed, namely, a back surface of the hydrogen pass S3 and a back surface of the air pass S1 abut on each other, to thereby enable power distribution with each other. In addition, stacking the current collectors 14, 15 resluts in forming the cooling space therebetween where the space S2 and the space S4 are merged. The unit cell 10A is stacked on the current collector 14 so that an open surface side of the space S1 is closed thereby and the tubular air pass is formed, which means that a part of wall surrounding this pass is composed of the cathode 12. Then, air and water are supplied from this air pass S1 to the cathode 12 of the unit cell 10A. Similarly, the unit cell 10A is stacked on the current collector 15 so that an open surface side of the space S3 is closed thereby and the plane fuel pass is formed, which means that a part of wall surrounding this pass is composed of the anode 13. Then hydrogen is supplied from this fuel pass S3 to the anode 13 of the unit cell 10A.

The frame members 16, 17 are stacked on the thus-structured current collectors 14, 15, respectively. As shown in FIG. 1 and FIG. 3, the frame member 16 that is stacked on the current collector 14 has such a shape as its length in a longitudinal direction is slightly bigger than that of the current collector 14, the frame member 16 is structured by connecting longitudinal frame portions 161 on both sides thereof with upper and lower horizontal frame portions 162, 163, and in a place surrounded by these frames defined is a window 164 to accommodate the lifted portions 141 of the current collector 14. Further, oblong holes 165 are also formed in a vicinity of both ends of the frame member 16 in a position and shape corresponding to the oblong holes 144 of the current collector 14. The horizontal frame portions 162, 163 of the frame member 16 and a part of the longitudinal frame portions 161 to which they are connected are made thinner than thickness of the whole longitudinal frame portions 161. Due to such a thickness relationship, a surface of the horizontal frame portions 162, 163 on which the current collector 14 is stacked forms a surface being back away from an abutting surface with the current collector 14 over a whole short edge side direction at a position corresponding to a range of forming the lifted portions of the current collector 14. Therefore, under such a state as the frame member 16 is stacked on the current collector 14, the lifted portions 141 of the current collector 14 come into contact with the cathode 12 of the unit cell 10A within the window 164, while in a portion facing the horizontal frame portions 162, 163, the lifted portions 141 abut thereon. Thus, between the current collector 14 and the frame member 16, an air pass totally passing therethrough in a longitudinal direction is defined by a plurality of tubular spaces, which are surrounded by the lifted portions 141 and an inside surface of the horizontal portion 162 in an upper portion, the lifted portions 141 of the current collector 14 and the cathode surface 12 of the unit cell 10A in a window 164 portion, and the lifted portions 141 of the current collector 14 and an inside surface of the horizontal portion 163 in a lower portion.

The frame member 17 that is stacked on the current collector 15 is structured to have the same size as the frame member 16, in which an opening bigger than a window 171 in a horizontal direction is formed on a body portion 170. Height of this opening defines height of the window 171, while width of the opening corresponds to the width between outer ends of both of the oblong holes 153 on the current collector 15. In a vicinity of both ends of this opening in a width direction, a pair of longitudinal frame portions is provided. Width sandwiched between both of the longitudinal frame portions 172 defines width of the window 171, width defined by the width of both of the longitudinal portions 172 and the opening of the body portion 170 is made equal to the size corresponding to the width of the oblong holes 153 formed on both ends of the current collector 15, and long holes 173 that actually correspond to positions and shapes of the oblong holes 153 are structured. The longitudinal frame portions 172 are made thinner than the body portion 170, so that due to such a thickness relationship, the longitudinal frame portions 172 form a surface being back away from an abutting surface by an amount equivalent to the height of the lifted portions 151 of the current collector 15 at a position where the longitudinal frame portions 172 are provided on a surface on which the current collector 15 is stacked. Therefore, under such a state as the frame member 17 is stacked on the current collector 15, the lifted portions 151 on the current collector 15 abut on the longitudinal frame portions 172 in a portion facing on the longitudinal frame portions 172, while in the window 171, the lifted portions 151 hold an abutting relation to come into contact with the anode 13 of the unit cell 10A. Thus, in a portion sandwiched between the long holes 173 structured is the plane hydrogen pass S3 regularly formed to run through the lifted portions 151.

On an internal wall surface of the air pass S1 and the cooling space S2, a hydrophilic process is provided. Specifically, it is preferable that the surface thereof is so processed as a contacting angle between the internal surface and water becomes 40°C or below, preferably 30°C or below. As one processing method, it is employed to apply hydrophilic processing chemicals on the surface. As the hydrophilic processing chemicals to be applied, listed are polyacrylamide, polyurethane resin, titanium oxide (TiO2), or the like. As the other hydrophilic processes, a process to make a metal surface rough is proposed. For example, a plasma processing may fall into this case. It is preferable to apply the hydrophilic process on a portion where the highest temperature is obtained. For example, it is preferable that the process may be preferentially performed in an order of: an internal wall surface F1 of the cooling space that is a back side of the top portions 142 of the lifted portions 141 abutting on the unit cell 10A; a side wall surface F2 of the air pass on a front side of the lifted portions 141 and a side wall surface F3 of the cooling space on a back side thereof; and a bottom surface F4 of the air pass. Further, the hydrophilic process may also be applied on an internal wall surface F5 of the lifted portions 151 that compose a part of the cooling space S2. Applying the hydrophilic process accelerates wetting of the internal wall surface, which causes to enhance effect by latent heat of water. In addition, water is caused not to clog up so that water supply is not inhibited.

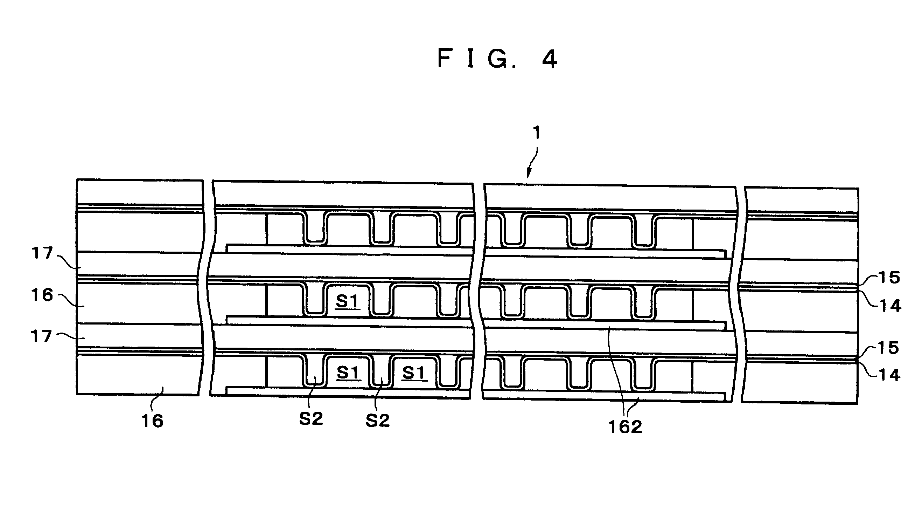

The current collectors 14, 15 are held by the thus-structured frame members 16, 17 to compose the separator 10B, and the separator 10B and the unit cell 10A are alternately stacked to compose a fuel cell stack 1. As shown in FIG. 4, on an upper surface of the thus-layered fuel cell stack 1, a large number of openings of the air pass S1 and the openings of the cooling spaces S2 are alternately laid in a horizontal direction being adjacent to each other, and openings with the same arrangement are laid at intervals of thickness of the frame member 17 and the horizontal frame portion 162 of the frame member 16 combined, in a layered direction to compose an intake portion of air and water. On a bottom surface of the fuel cell stack 1, a discharge portion of the air and the water with the same arrangement is structured as well.

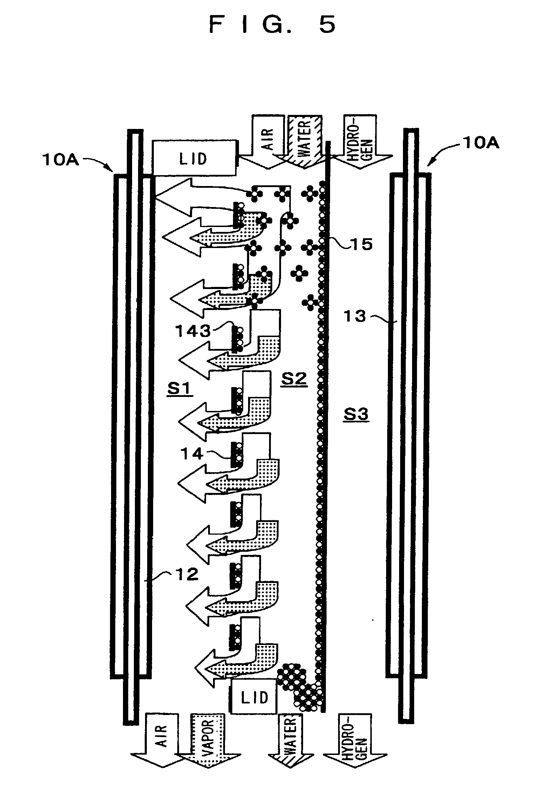

The thus-structured fuel cell stack operates as schematically shown in FIG. 5 by supplying air, water, and hydrogen to each electric cell. In this embodiment, the air and the water are uniformly supplied from an upper surface of the stack, so that the opening portion of the air pass S1 is stoppered with a lid to prevent the water from directly entering the air pass S1. In a format of supplying the air and the water separately to the air pass S1 and the cooling space S2, to stopper the air pass S1 is not necessarily required if the air pass S1 side is structured to be supplied only with the air. As shown in the figure, the air and the water supplied to the cooling space S2 enter the upper portion of the cooling space with water droplets nebulized to be mixed in airflow (hereinafter, such a state is referred to as mixed flow). Under a normal operation of the fuel cell, since the unit cell 10A generates heat by reaction, the mixed flow in the cooling space S2 is heated. The water droplets in the mixed flow adhere to a wall surface of the cooling space S2 since the hydrophilic process is applied thereon, which generates a latent heat cooling effect that is to draw heat from the wall surface by evaporating with heat application. The water that is turned to vapor in such a way enters the air pass S1 from the through-holes 143 as shown with half-tone dot meshing arrowheads in the figure, together with the air whose flow is shown with outline arrowheads in the figure, and the water adheres to the cathode 12 side of the unit cell 10A to humidify the cathode 12. Then, excessive air and vapor, which have entered the air pass S1, are discharged from the air pass opening of the downward cell stack. On the other hand, air and water, which have not entered the air pass S1, are discharged from the cooling space S2 opening of the downward cell stack.

Hydrogen supply to the fuel pass S3 is performed from one of the hydrogen passes L1, L2 (refer to FIG. 1) passing through both sides of each electric cell 10 in a layered direction thereof, through spaces between longitudinal frame portions 172 and the lifted portions 151, and from the fuel pass S3 connected thereto. Thereby, the hydrogen is supplied to the anode 13 of the unit cell 10A. At this anode 13 side, excessive hydrogen entering the fuel pass S3 is discharged to the opposite side of the hydrogen pass to be discharged or collected by a not-shown pipe connected to this hydrogen pass.

As the above-described operation, in this embodiment, mist-type droplets do not enter directly the air pass S1 with the airflow so that it is advantageous that the airflow current may not be occluded by the water droplets even with such the extremely thin air pass S1 as formed by the presswork.

The air pass S1 and the cooling space S2 are alternately arranged along the electrode surface to be parallel to each other and they are structured to be adjacent to each other having a side wall of the lifted portion 141 therebetween. Since the air and the water flow along the sidewall, the sidewall exercises an operation as a cooling fin. As such, since the air pass S1 and the cooling space S2 are alternately arranged to be parallel to each other, cooling efficiency of the fuel cell improves, which enables uniform cooling.

When the separator 10B is structured to be thin and a space is provided inside the lifted portions 141, a temperature gap between a portion abutting on the heat-generating unit cell 10A and a portion apart from the unit cell 10A broadens. Therefore, a vapor amount required to have a saturated state becomes partially different within the air pass S1. For example, a portion of the high-temperature electrode side requires more vapor amount to have the saturated state than a portion apart from the electrode. Such a temperature difference may cause drying of the cathode 12. In this embodiment, however, the space is made into the cooling space S2 and the whole separator 10B is uniformly cooled, to thereby prevent generation of a partial temperature gap and to maintain a uniform saturated state within the air pass S1, which results in keeping the cathode 12 in a moist state.

Additionally, in this embodiment, the air and the water entering from the upper opening of the separator 10B cool the current collectors 14, 15 at the cooling space S2 side mainly by the latent heat cooling, but a portion where such latent heat cooling occurs may not be isolated by the air pass S1 and it is back side of a portion where the current collectors 14, 15 directly abut on the electrode. Therefore, in the cooling space S2, the top portions 142, 152 of both of the lifted portions 141, 151 are the closest to the electrode to receive heat and since the portion thereof is directly cooled, it is possible to cool this portion effectively. Since the lifted portions 151 constitute a part of the cooling space S2, the abutting surface in contact with the anode 13 can also be directly cooled from back side of the lifted portions 151 that are the same cooling space, so that it is not necessary to separately provide a special pass to cool the anode 13, thereby simplifying the cooling pass.

The above-described lifted portions 141, 151 of the current collectors 14, 15 are both provided at even intervals, so that the air pass S1, the cooling space S2, and the fuel pass S3 are all equally arranged at even intervals, but the lifted portions 141, 151 are not limited to such a structure and the arrangement intervals thereof may be changed accordingly depending on distribution or the like of the air and hydrogen flow. The arrangement directions of the air pass S1 and the fuel pass S3 may also be changed in any direction such as arranging in a radiation direction along a direction of gas flow. For example, when supplying water from an injection nozzle, since the water is injected in a radiation direction by having an injection inlet of the injection nozzle as a center, the lifted portions 141 may be arranged along a radiation direction when an end of the nozzle is a center of the radiation. Such a structure may be available that the intervals between the lifted portions 141 are small in a position close to the injection nozzle (width of the air pass is small), and intervals thereof at a position apart from the injection nozzle are big (width of the air pass is widened).

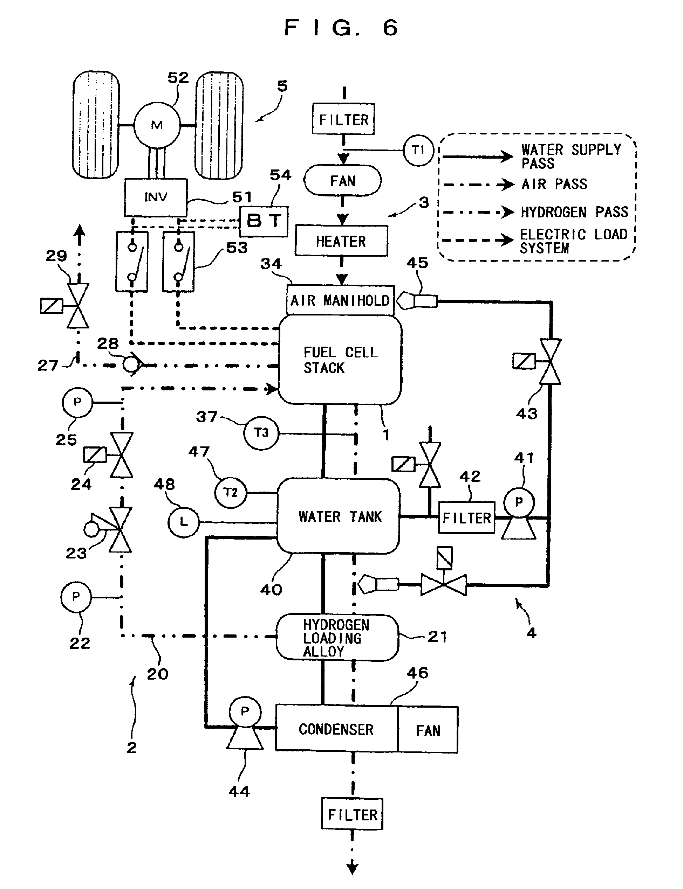

FIG. 6 shown next shows a structural example of a fuel cell system for vehicles using the fuel cell stack 1 related to application of this invention. This fuel cell system is generally composed of the fuel cell stack 1, a fuel supply system 2 including a hydrogen loading alloy 21 as a hydrogen supply means, an air supply system 3, a hydrogen supply system 4, and a load system 5.

In the fuel supply system 2, hydrogen emitted by the hydrogen loading alloy 21 through a hydrogen supply pass 20 is delivered to a hydrogen pass of the fuel cell stack 1 of fuel cells. In the hydrogen supply pass 20, a hydrogen primary pressure sensor 22, a hydrogen regulator 23, a hydrogen supply electromagnetic valve 24, and a hydrogen secondary pressure sensor 25 are provided from the hydrogen loading alloy 21 side to the fuel cell stack 1 side. The hydrogen primary pressure sensor 22 monitors a hydrogen pressure on the hydrogen loading alloy 21 side. The hydrogen regulator 23 adjusts the hydrogen pressure to a pressure appropriate for supplying the hydrogen to the fuel cell stack 1. Hydrogen supply to the fuel cell stack 1 is electrically controlled by opening and shutting of the hydrogen supply electromagnetic valve 24, and when hydrogen gas is not supplied, this electromagnetic valve 24 is closed so that hydrogen gas supply is stopped. The hydrogen secondary pressure sensor 25 monitors the hydrogen gas pressure just before the hydrogen gas is supplied to the fuel cell stack 1.

A flow of the hydrogen within the fuel cell stack 1 is as previously described. In the fuel supply system 2, the hydrogen gas discharged from the hydrogen pass of the fuel cell stack 1 is emitted to the atmosphere via a hydrogen discharge pass 27. The hydrogen discharge pass 27 is provided with a check valve 28 and an electromagnetic valve 29. The check valve 28 prevents air from entering the anode of the fuel cell stack 1 via the hydrogen discharge pass 27. The electromagnetic valve 29 is intermittently driven to attempt complete combustion of the hydrogen.

In the water supply system 4, water in a tank 40 is sent by pressure with a pump 41 to a nozzle 45 arranged in an air manihold 34, and the water is continuously or intermittently spouted out therefrom in the air manihold 34. This water, as previously described, is delivered to the air pass S1 and the cooling space S2 via an upper opening of the fuel cell stack 1. Here, latent heat is preferentially taken out of the moisture so as to prevent the moisture on the solid polymer electrolyte membrane 11 of the cathode 12 side from evaporating. Therefore, the solid polymer electrolyte membrane 11 is not dehydrated at the cathode 12 side and is always maintained in a uniform moist state by generated water. Further, vapor supplied on the surface of the cathode 12 also takes out heat from the cathode 12 itself to cool it, and then water entering the cooling space S2 also takes out heat. Thereby, temperature of the fuel cell stack 1 can be controlled.

This means that even if a cooling water system is not added to the fuel cell stack 1, the fuel cell stack 1 can be fully cooled. Output of the pump 41 is controlled depending on temperature of exhaust air detected by the exhaust temperature sensor 37 to maintain temperature of the fuel cell stack 1 at a desired temperature. A filter 42 is provided at an intake side of the pump 41, an electromagnetic valve 43 is provided between the nozzle 45 and the pump 41, and the electromagnetic valve 43 controls injection quantity from the nozzle 45. The water in the tank 40 is supplied from the nozzle 45, which is arranged in the air manihold 34, to a surface of the fuel cell stack 1, collected in a water condenser 46, and then returned to the tank 40 by the pump 44. A water temperature sensor 47 monitors water temperature of the tank 40 and a water level sensor 48 monitors a water level.

The load system 5 takes out output of the fuel cell stack 1 to the outside via an inverter 51 to drive a load of a motor 52 or the like. This load system 5 is provided with a relay 53 for switching. In the load system 5, a battery 54 is also connected between the relay 53 and the inverter 51. This battery 54 accumulates regenerative current of the motor 52 and in a case of lacking in the fuel cell output, the output is supplemented.

This system is characterized in that the air pass S1 and the cooling pass S2 in the fuel cell stack 1 can be arranged in an integrated pass and the air and water can be simultaneously passed therethrough, so that a device for cooling needs not to be additionally provided.

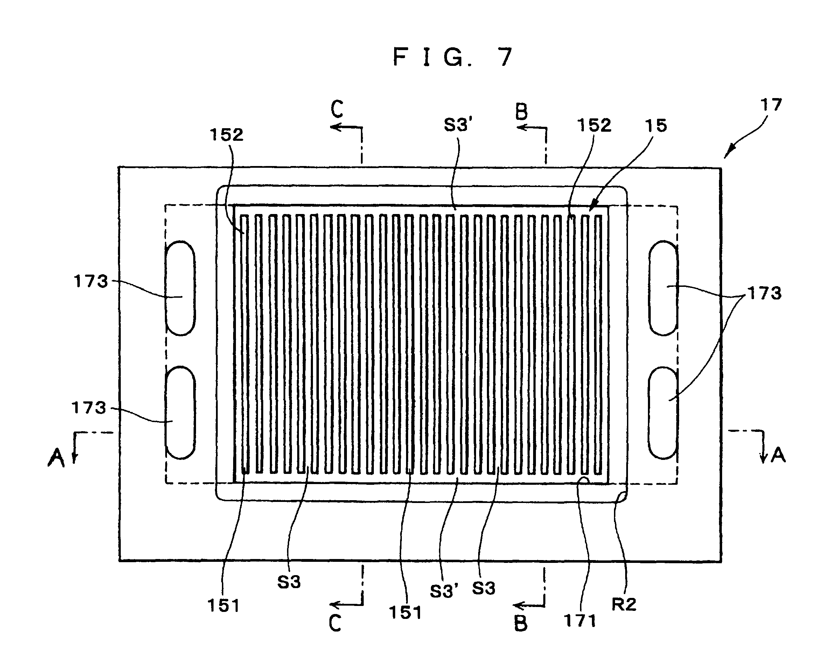

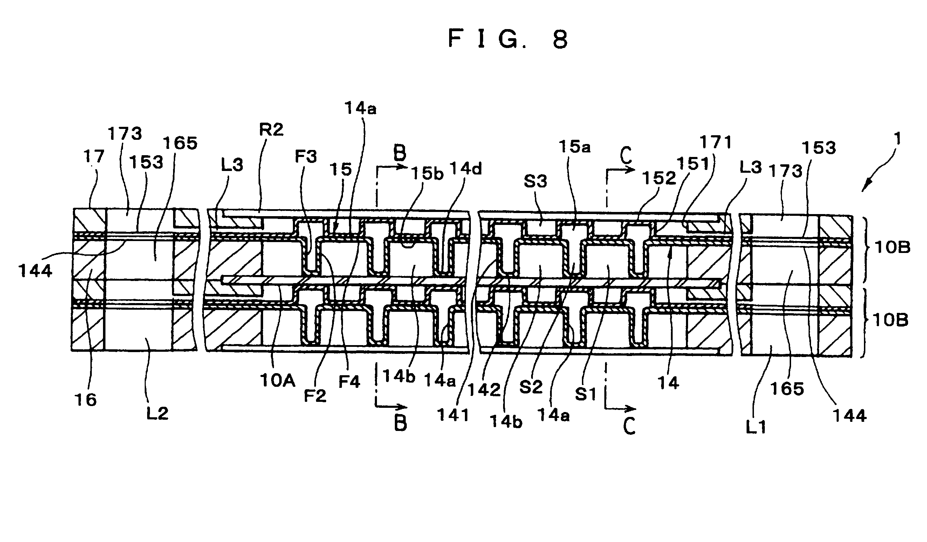

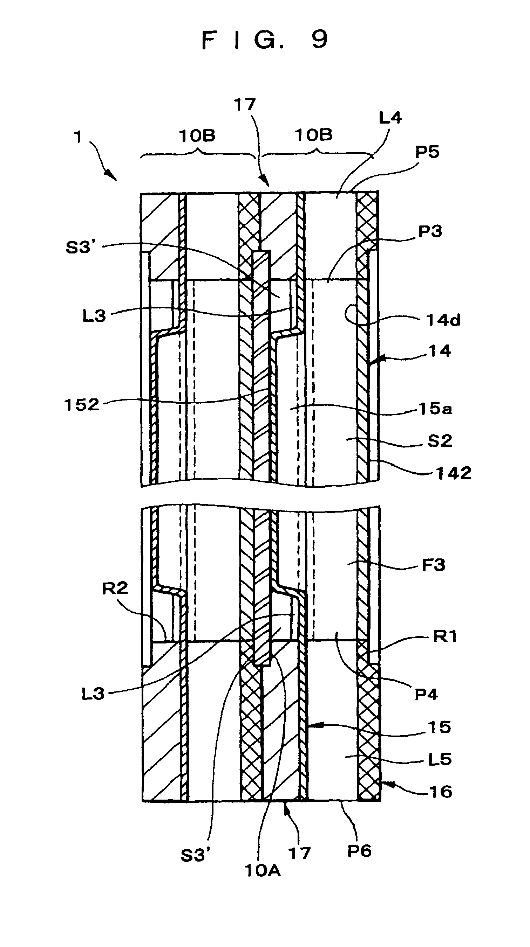

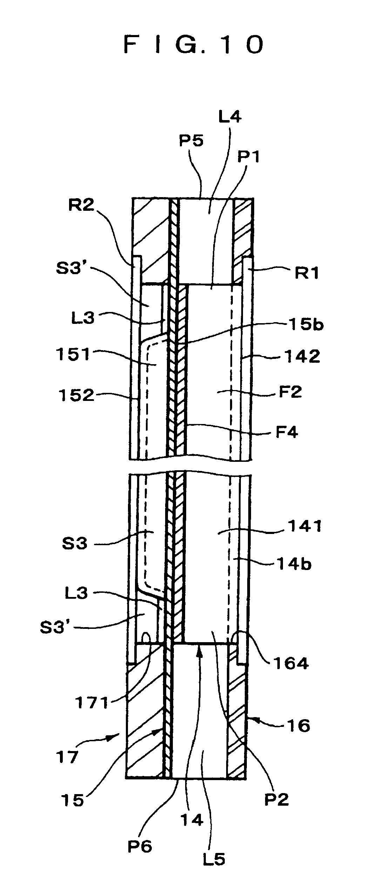

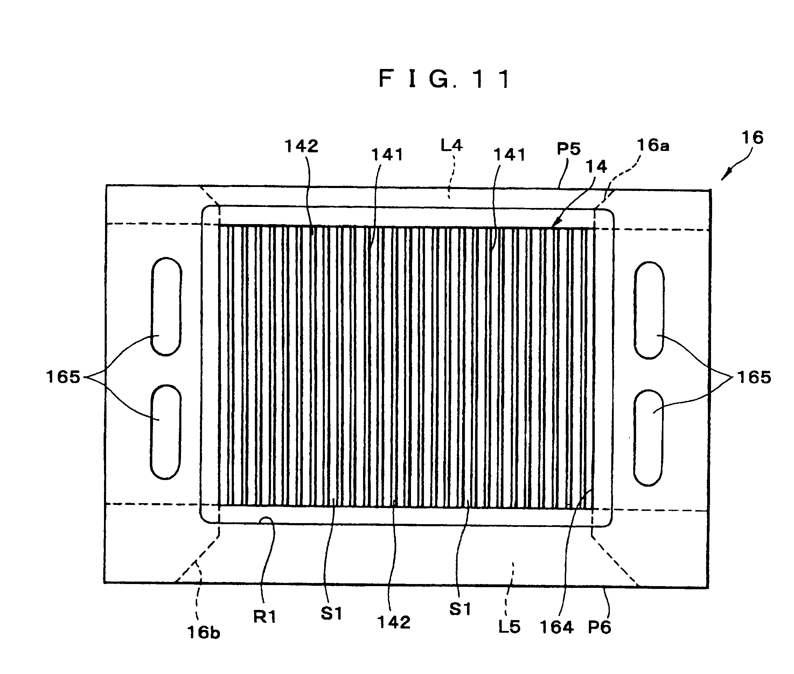

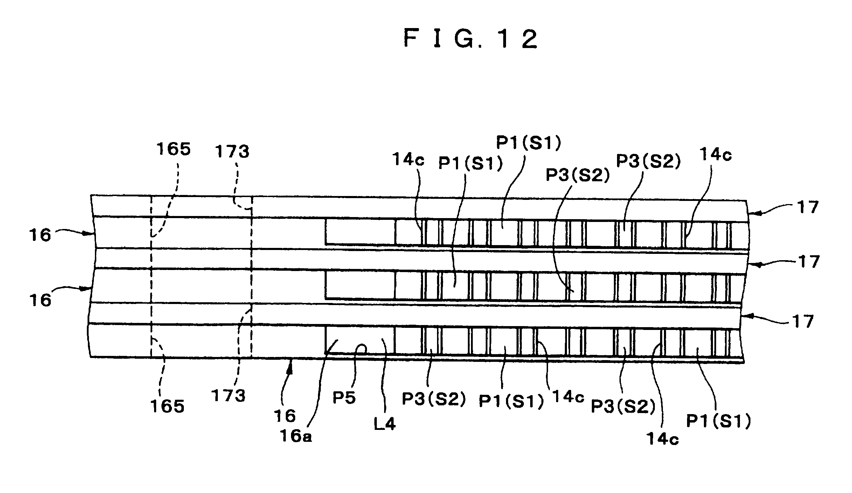

In the above-described first embodiment, a pass on the anode 13 side is formed into a plane surface so that the lifted portions 151 of the current collector 15, which is connected to the anode 13, are intermittently arranged to have columnar shapes, but when this pass is made into a pass having groove-shape similar to the air pass S1, the lifted portions 151 may be formed into a series of protrusions. In a second embodiment shown in FIG. 7 to FIG. 12, this structure is employed. FIG. 7 is a front view viewing the fuel cell separator from a side on which the anode is stacked, FIG. 8 is a partial horizontal sectional view of the fuel cell stack using this separator (A-A sectional view in FIG. 7), FIG. 9 is a partial vertical sectional view of the same fuel cell stack (B-B sectional view in FIG. 7 and FIG. 8), FIG. 10 is a partial vertical sectional view of the other part of the fuel cell stack (C-C sectional view in FIG. 7 and FIG. 8), FIG. 11 is a rear view viewing the fuel cell separator from a side on which the cathode is stacked, and FIG. 12 is a partial top view of the fuel cell stack.

In this embodiment as shown in FIG. 8, the separator 10B comprises the current collectors 14, 15 for taking out current to the outside by abutting on the electrode of the unit cell 10A and the frame members 16, 17 armored on a peripheral edge portion of each current collector 14, 15. The current collectors 14, 15 are made of a metal plate. A constituting metal is the same as in the previous first embodiment. The current collector 15 abuts on the anode of the unit cell 10A, while the current collector 14 abuts on the cathode thereof. As shown in FIG. 7, the current collector 15, which is made of a rectangular plate material, is structured with a plurality of lifted portions 151 by the presswork. The lifted portions 151 are arranged successively in linear-shapes along a short edge side of the plate material, and the lifted portions 151 are arranged at even intervals. Grooves are formed between the lifted portions 151 so that the hydrogen pass S3, through which hydrogen passes as a fuel, is formed. A surface of a top portion of the lifted portion 151 is an abutting portion 152 on which the anode abuts. Grooves 15a are formed on back side of the lifted portions 151 and, as shown in FIG. 9, both ends of these grooves 15a do not reach end side portions of the plate material so that both ends thereof are occluded. Holes 153 are formed on both ends of the current collector 15 to compose hydrogen supply passes by these holes 153 when the separator 10B is stacked.

As shown in FIG. 11, on the current collector 14, which is made of rectangular plate material, a plurality of lifted portions 141 are formed by the presswork. These lifted portions 141 are formed successively in linear-shapes with each thereof being parallel to a short edge side of the plate material, and the lifted portions 141 are arranged at even intervals. Grooves are formed between the lifted portions 141 so that the air pass S1 through which air passes, is formed. A surface of a top portion of the lifted portion 141 is an abutting portion 142 on which the cathode abuts. On back side of the lifted portions 141 hollow portions are formed and the hollow portions form the cooling pass S2. The air pass S1 and the cooling pass S2 reach end portions of the plate material and both ends comprise opening portions that open at the end side portions of the plate material. Holes 144 are formed on both ends of the current collector 14 to compose hydrogen supply passes by these holes 144 when the separator 10B is stacked.

The above-described current collectors 14, 15 are stacked to be fixed as the respective lifted portions 141, 151 face outside. Here, a back surface 15b of the hydrogen pass S3 abut on a back surface 14a of the air pass S1, to thereby enable power distribution with each other. In addition, stacking the current collectors 14, 15 results in forming the cooling pass S2 as shown in FIG. 9, wherein the groove 15a constitutes a part of the cooling pass S2. The air pass S1 is stacked on the unit cell 10A as shown in FIG. 8 and FIG. 10, and a tubular pass is structured by closing an opening portion 14b of the groove, wherein a part of the internal wall thereof is composed of the cathode. Oxygen and water are supplied from this air pass S1 to the cathode of the unit cell 10A.

The opening portion on one end of the air pass S1 comprises an introducing port P1 to which air and water flow in, while the opening portion on the other end comprises a lead-out port P2 from which air and water flow out. The opening portion on one end of the cooling pass S2 comprises a flow-in open port P3 to which air and water flow in, while the opening portion on the other end comprises an outlet open port P4 from which air and water flow out. In the above-described structure, the air pass S1 and the cooling pass S2 are alternately arranged to be parallel to each other, wherein each thereof is structured to be adjacent to each other with a side wall 14c sandwiched therebetween. Therefore, the introducing port P1 and the flow-in open port P3 are also alternately arranged and the lead-out port P2 and the outlet open port P4 are also alternately arranged. Further, air and water flow along the sidewall 14c, so that the sidewall 14c exercises an operation as a cooling fin. Since the air pass S1 and the cooling pass S2 are alternately arranged to be parallel to each other, cooling efficiency of the fuel cell improves, which enables uniform cooling.

The frame members 16, 17 are stacked on the current collectors 14, 15, respectively. As shown in FIG. 7, the frame member 17 that is stacked on the current collector 15 is structured to be the same size as that of the current collector 15 and a window 171 is formed in the center thereof to accommodate the lifted portions 151. Further, holes 173 are formed in a vicinity of both ends of the frame member 17 in a position corresponding to the holes 153 of the current collector 15 and between these holes 173 and the window 171, recessed portions are formed on a plane surface of the side abutting on the current collector 15 so as to provide a hydrogen pass L3. On a plane surface opposite the surface abutting on the current collector 15, recessed portions of which outline is formed along the window 171 is formed so as to provide a housing portion R2 where the unit cell 10A is housed.

As shown in FIG. 7, FIG. 9, and FIG. 10, there is a gap between end portions of the lifted portions 151 and an internal wall on the end sides of the window 171 of the frame member 17 and with this gap, a hydrogen pass S3' is structured along a long edge side direction of the current collector 15. This hydrogen pass S3' supplies hydrogen to each hydrogen pass S3. In addition, the hydrogen pass S3' also supplies hydrogen to the anode.

The frame member 16 that is stacked on the current collector 14 is structured to have the same size as that of the frame member 17, and a window 164 is formed in the center thereof to accommodate the lifted portions 141. Further, holes 165 are formed in a vicinity of both ends of the frame member 16 in a position corresponding to the holes 173 of the frame member 17. On a surface of the frame member 16 on which the current collector 14 is stacked, grooves are formed along a pair of long edge sides, each of which faces to each other, of the frame member 16, and stacking the current collectors 14, 15 thereon results in forming air passes L4, L5. One end of the air pass L4 is connected to an opening P5 formed on an end surface of a long edge side of the frame member 16, while the other end thereof is connected to the introducing port P1 of the air pass S1 and the flow-in open port P3 of the cooling pass S2.

An upstream portion of the air pass L4 has its internal wall of the end portions being a tapered surface 16a as a cross-sectional area decreases from the opening P5 side to the air pass S1 side, which facilitates absorbing nebulized water emitted from the previously mentioned air manihold 34. On the other hand, one end of the air pass L5 on a downstream side is connected to the lead-out port P2 of the air pass S1 and the outlet open port P4 of the cooling pass S2, while the other end thereof is connected to the opening P6 formed on an end surface of a long edge side of the frame member 16. The air pass L5 has its internal wall of the end portions being a tapered surface 16b as a cross-sectional area decreases from the opening P6 side to the air pass S1 side. Even when the fuel cell stack 1 is tilted, this tapered surface 16b maintains to discharge water. On a plane surface of the frame member 16, which is opposite to the surface abutting on the current collector 14, a recessed portion of which outline is formed along the window 164 is formed so as to provide a housing portion R1 to house the unit cell 10A.

A structure of the unit cell 10A in this embodiment is the same as that of explained in the previous first embodiment with reference to FIG. 2. A method for a hydrophilic process applied on each portion of the pass and the processing region thereof are also the same as the first embodiment.

The thus-structured frame members 16, 17 hold the current collectors 14, 15 to constitute the separator 10B, and the separator 10B and the unit cell 10A are alternately layered to constitute the fuel cell stack 1. FIG. 12 is a partial plane view of the fuel cell stack 1. On an upper surface of the fuel cell stack 1, a large number of introducing ports P1 and flow-in open ports P3 are alternately open, and as previously noted, air flows in from the air manihold 34 and water emitted from the nozzle 45 simultaneously flows in to the introducing ports P1 and the flow-in open ports P3. The sidewall 14c is arranged in the air pass and also operates as a cooling fin.

When the separator is structured to be thin and a space (S2) is provided inside the lifted portions 141, a temperature gap between a portion abutting on the heat-generating unit cell 10A and a portion apart from the unit cell 10A broadens. Therefore, a vapor amount required to have a saturated state becomes partially different within the air pass. For example, a portion of the high-temperature electrode side requires more vapor amount to have the saturated state than a portion apart from the electrode. Such a temperature difference may cause drying of the cathode, but the cooling pass S2 allows to uniformly cool the whole separator, to thereby prevent generation of a partial temperature gap and to maintain a uniform saturated state within the air pass S1, which results in keeping the cathode in a moist state.

The air and the water flowing in from the introducing port P1 and the flow-in open port P3 provide the cathode with oxygen within the air pass S1 to cool the current collectors 14, 15 with the latent heat cooling. The air and the water flowing in from the flow-in open port P3 similarly cool the current collectors 14, 15 with the latent heat cooling. Here, an internal wall 14d is the closest to the electrode in the cooling pass S2 to generate heat, but this part can be efficiently cooled by flowing the air and the water into the cooling pass S2. Since the groove 15a constitutes a part of the cooling pass S2, the abutting surface 152, on which the hydrogen electrode abuts, can also be directly cooled from a back side and from a hydrogen electrode side as well, so that cooling efficiency may be more enhanced.

The above-described lifted portions 141, 151 of the current collectors 14, 15 are both provided at even intervals, so that the air pass S1, the cooling pass S2, and the hydrogen pass S3 are also all equally arranged at even intervals, but the lifted portions 141, 151 are not limited to such a structure and the arrangement intervals thereof may be changed accordingly depending on distribution or the like of the air flow. The arrangement directions of the air pass S1 and the hydrogen pass S3 are not necessarily parallel to each other and they may be changed in any direction such as in a radiation direction along a direction of gas flow. For example, when supplying water from the injection nozzle, since the water is injected in a radiation direction by having the injection inlet of the injection nozzle as a center, the lifted portions 141 may be arranged along a radiation direction when an end of the nozzle is a center of the radiation. Such a structure may be available that the intervals between the lifted portions 141 are small in a position close to the injection nozzle (width of the air pass is small), and intervals thereof at a position apart from the injection nozzle are big (width of the air pass is widened).

The above-described second embodiment is characterized in that the air pass S1 and the cooling pass S2 can be arranged in the same pass as that of the air, and the air and the water can be simultaneously passed therethrough, so that a device for cooling needs not to be additionally provided.

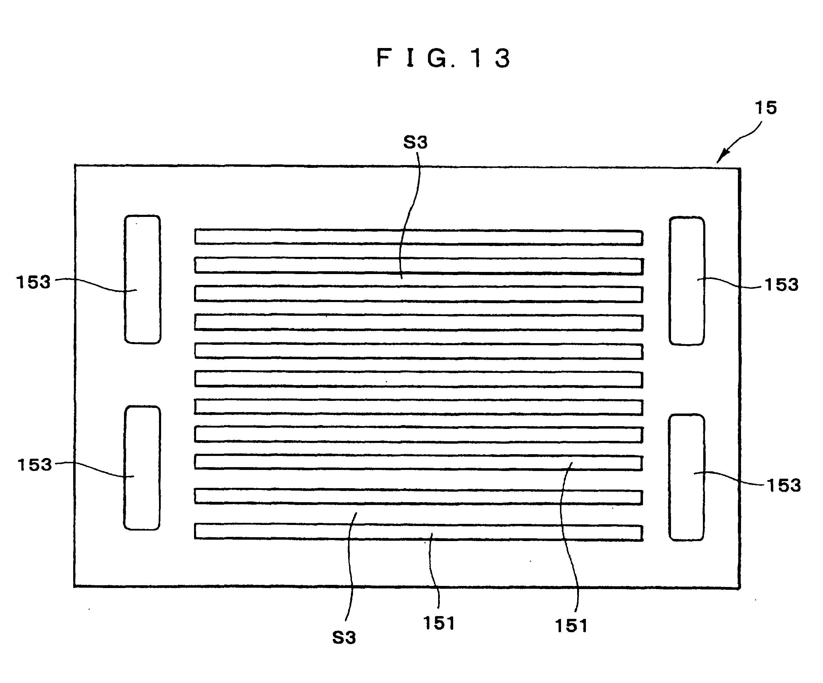

As a modification example of the second embodiment, a pass on the anode side may further adopt other structures. A modification example shown in FIG. 13 is that the lifted portions 151 of the current collector 15 that is connect to the anode are linearly formed along a long edge of the current collector 15. Adopting this structure may present such an advantage that the hydrogen pass S3 is arranged along the direction of a hydrogen gas flow so that the hydrogen gas flow is less stagnant and retained.

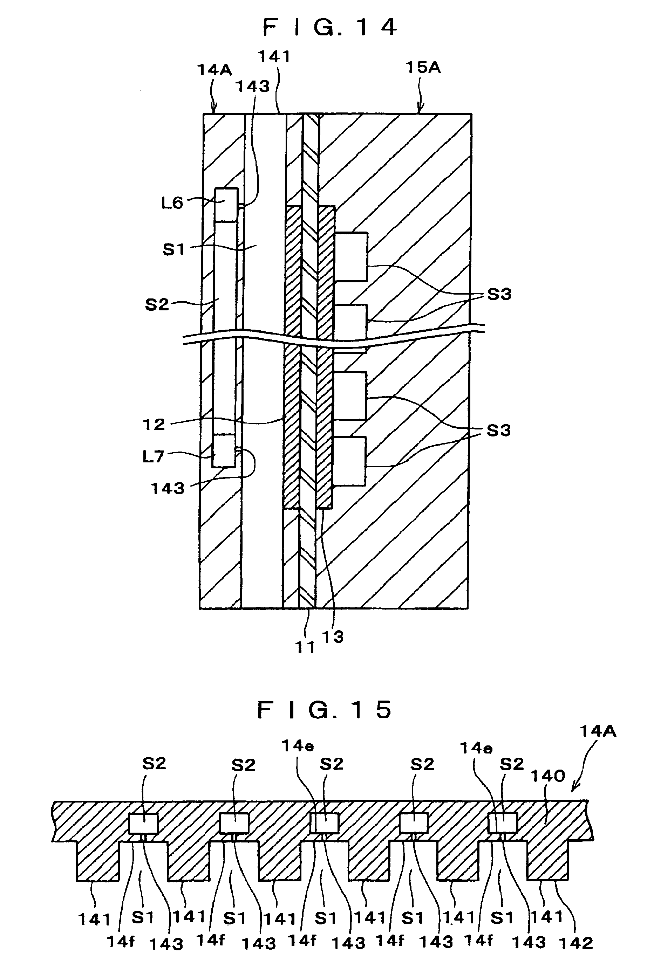

Although each above-described embodiment is composed of a separator that is mainly formed by pressing, this invention can be also applied to a case when the separator is formed with shaving processed goods such as carbon black. A third embodiment described below employs this structure. As shown in FIG. 14, in this third embodiment, a unit of the fuel cell is composed of: a unit cell comprising a solid polymer electrolyte membrane 11, and a cathode 12 that is an oxidant electrode and an anode 13, which are stacked on both sides of the solid polymer electrolyte membrane 11 respectively; a separator 14A stacked on the cathode 12 of the unit cell; and a separator 15A stacked on the anode 13. Specifically, the solid polymer electrolyte membrane 11 is interposed between the cathode 12 and the anode 13 to compose the unit cell and the separators 14A, 15A sandwich its unit therebetween.

The separators 14A, 15A have electric conductivity and are made of material having corrosion resistance, such as graphite, which is a metal having electric conductivity and corrosion resistance. As a metal having electric conductivity and corrosion resistance, listed are, for example, stainless steel, a nickel alloy, a titanium alloy, or the like with a corrosion-resistant electric conductivity process applied.

On the separator 14A, a plurality of oxidant gas supplying grooves are formed on a surface abutting on the cathode 12 (one end surface) in parallel to each other at substantially even intervals, and an air supply pass S1 is formed with the cathode 12 stacked thereon. The air supply pass S1 is formed from one long edge of the separator 14A to the other long edge thereof, and both thereof open at each long edge portion. A wall partition is formed between the air supply passes S1 by the lifted portions 141, and the top portions 142 thereof abut on the cathode 12.

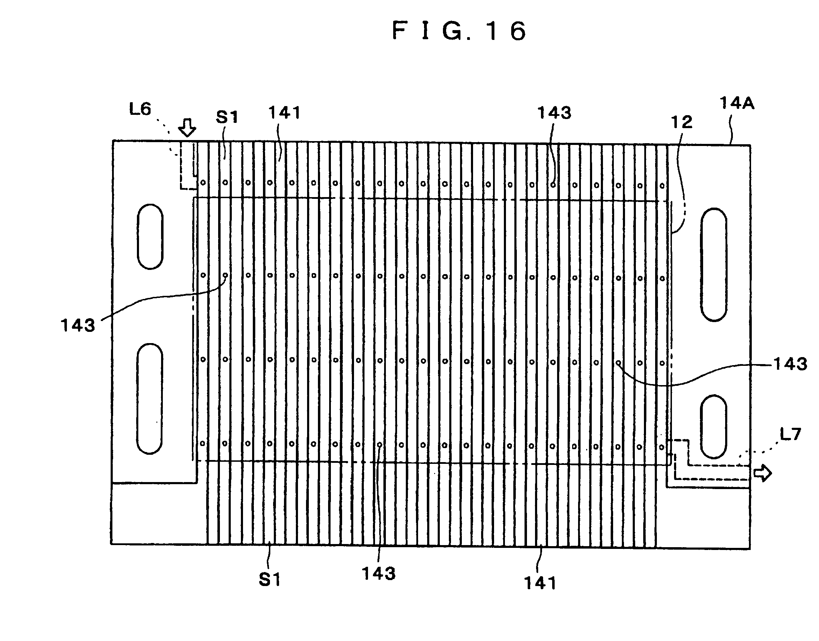

The separator 14A comprises a plate-shaped body portion 140 provided with the air supply pass S1 and the wall partition 141, and in the body portion 140, a cooling pass S2 formed along the air supply pass S1 as the oxidant gas-supplying groove is provided. As a cooling medium to cool the fuel cell, water passes through the cooling passes S2. The cooling passes S2 are respectively formed along a plurality of the air supply passes S1 that are formed on the separator 14A, and as shown in FIG. 16, one end of the cooling pass S2 is connected to a supply pass L6 and the other end is connected to a discharge pass L7, respectively. The supply pass L6 is connected to a supply line 40a in a later-described water supply system 4, which is provided outside of the fuel cell stack 1, the discharge pass L7 is connected to an exchange line 40b, water not supplied to the air supply pass S1 is returned to a water tank 40 so that cooling water circulates between the fuel cell stack 1 and the water tank 40. As such, the cooling water passes through from one end of an edge portion of the separator 14A to the other end thereof.

Through-holes 143 communicate between the air supply pass S1 and the cooling pass S2 as a pass of a supply means for supplying water to the air supply pass S1. The through-holes 143 are plurally provided at even intervals and the cooling water flowing in the cooling pass S2 flows in the air supply pass S1 via the through-holes 143. The water supplied from the through-holes 143 to the air supply pass S1 exercises a cooling effect by latent heat generated on its evaporation to prevent drying of the cathode 12, which enables to keep a moist state all the time.

Here, the cooling water flowing in the cooling pass S2 needs not to be fully filled in the cooling pass S2 and the flow amount may be such that the water rolls on an internal wall of the cooling pass S2. Thereby, for example, when the water rolls on a side surface 14e on which the through-holes 143 are formed, the water flows out from the through-holes 143 to the air supply pass S1, while when the water rolls on a different side surface, the water may not flow out to the air supply pass S1. However, when the water rolls on the internal wall of the cooling pass S2, the separator 14A is cooled to obtain an enough cooling effect.

On the separator 15A on the anode 13 side, a gas supply pass S3 through which fuel gas passes is formed. The gas supply pass S3 is formed in a direction orthogonal to the air supply pass S1 with the unit being structured. It is also possible to provide the same pass on the separator 15A as the cooling pass S2, which is provided on the separator 14A and through which the cooling medium passes.

In this embodiment, the air supply pass S1 is structured to be positioned along an up-and-down direction with the fuel cell unit being set to be used. Such a structure allows dropping the cooling water supplied to the air supply pass S1 down below to easily discharge it from the air supply pass S1.

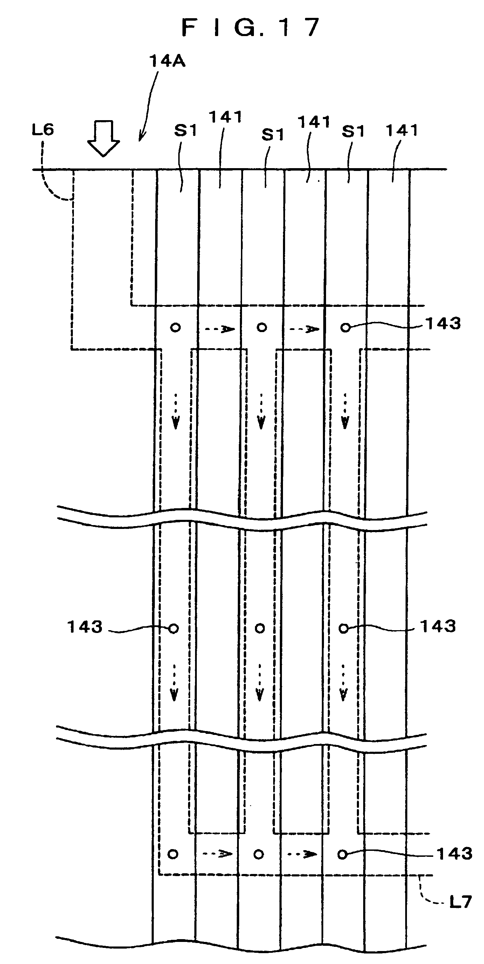

As shown in FIG. 17, the thus-structured fuel cell unit is plurally layered, specifically serially connected, to constitute the fuel cell stack 1. In a structure of the above separator 14A, it is applicable to have such a structure that the cooling water flows in an opposite direction to a direction of the air flow.

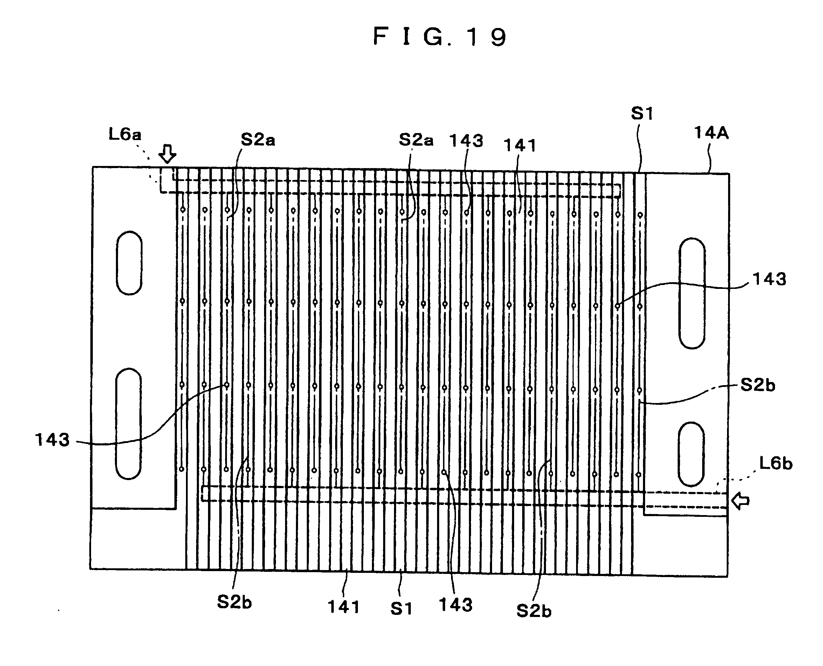

As a structure of the above-described fuel cell separator 14A, other structures exemplified below may also be applied. As a first modification embodiment, such a structure may be employed that the discharge pass L7 is not provided and the cooling water supplied in the cooling pass S2 is all flowed out to the air supply pass S1 via the through-holes 143. In this case, for example, as shown in FIG. 19, supply passes L6a, L6b are respectively provided along end edges of the separator 14A (top edge side and bottom edge side) facing parallel to each other, and cooling passes S2a, S2b are alternately connected to the supply pass L6a, L6b, respectively. In this structure, the cooling water flows from top to bottom in the cooling pass S2a and the cooling water flows from bottom to top in the cooling pass S2b. That is, the cooling water passes through in opposite directions, respectively. Since the cooling water flows in the pass while exchanging heat, a temperature of the cooling water increases toward a downstream side so that a cooling effect decreases. However, as in this embodiment, directions in which the cooling water flows are alternately reversed, to thereby uniformly cool the separator 14A.

As a second modification embodiment, such a structure may be employed that the discharge pass L7 is not provided and a bottom end of all the cooling pass S2 is a portion to discharge the cooling water outside from a bottom end edge of the separator 14A. This case can adopt such a structure that discharged water is collected in a catchment tray provided on a bottom side of the fuel cell stack 1 and then returned to a later-mentioned tank 40.

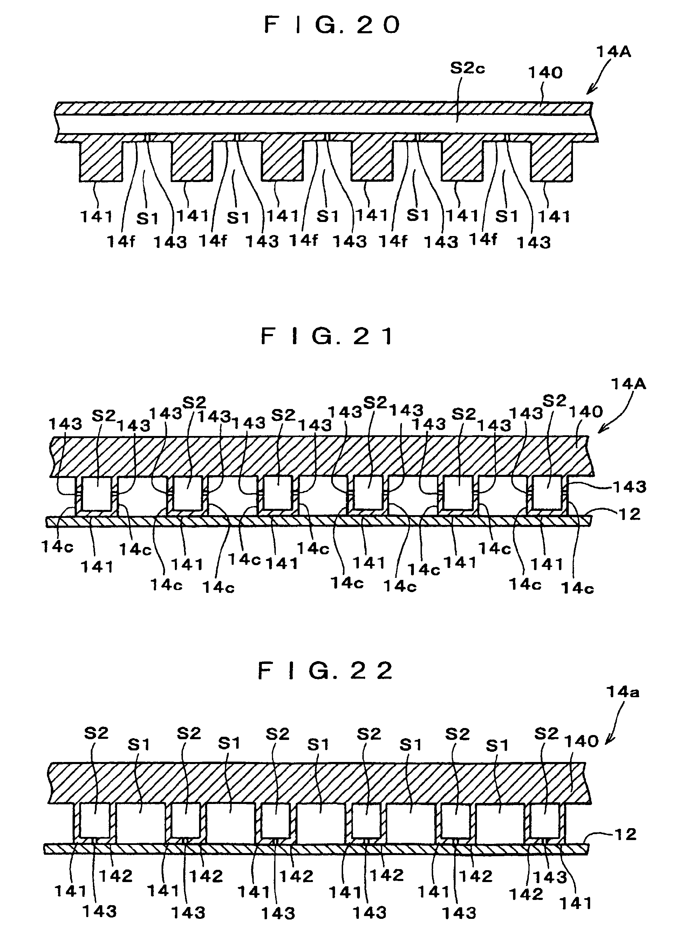

As a third modification embodiment, as shown in FIG. 20, the cooling pass S2c may be formed in a direction crossing the air supply pass S1.

As a fourth modification embodiment, as shown in FIG. 21, the cooling pass S2 can be formed in the wall partition 141. Since the wall partition 141 abuts on the cathode 12, when the cooling pass S2 is formed in the wall partition 141, a position of a cooling medium comes close to the cathode 12, which enhances the cooling effect. Additionally, in this case, the through-holes 143 communicating with the air supply pass S1 are formed on the sidewall surface 14c of the air supply pass S1. By providing the through-holes 143 on the sidewall surface 14c, the cooling water supplied to the air supply pass S1 can easily abut on the cathode 12, which makes it possible to surely exercise an effect of keeping the electrode in a moist state.

As a fifth modification embodiment, as shown in FIG. 22, the cooling pass S2 may be formed in the wall partition 141 and the through-holes 143 may be structured on a top end portion (abutting surface) 142 of the wall partition 141 in contact with the cathode 12. In this structure, the cooling water is directly supplied to the cathode 12 via the through-holes 143 so as to prevent drying of the cathode 12.

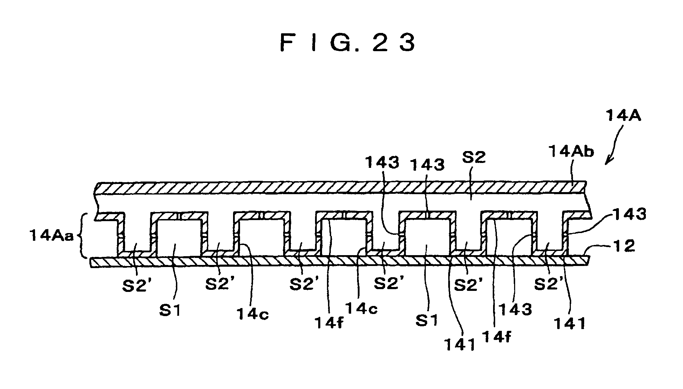

As a sixth modification embodiment, as shown in FIG. 23, such a structure may be employed that the separator 14A comprises an air supply pass composing member 14Aa formed to have a wavy plane cross section and a plane-shaped rear portion 14Ab stacked on the back side thereof. A plane-shaped cooling pass S2 is structured in a space between the rear portion 14Ab and the air supply pass composing member 14Aa to form a groove-shaped pass S2' in the wall partition 141. Such a structure increases an area to fill the cooling water so that the cooling effect improves. The through-holes 143 can also be formed on both of a bottom surface 14f in the air supply pass S1 and a sidewall surface 14c in the air supply pass S1.

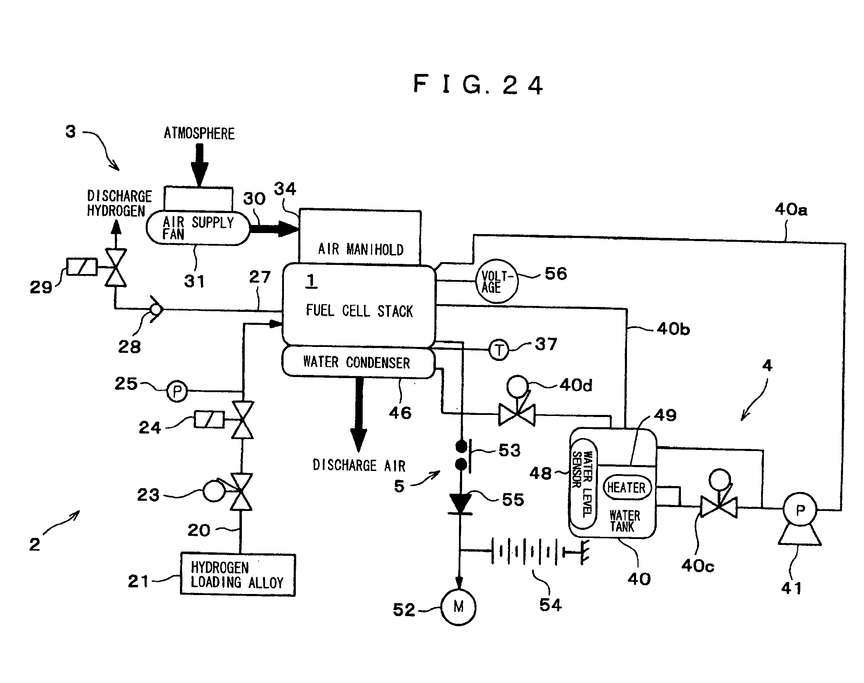

Next, a structure of a fuel cell system using the above-structured fuel cell stack 1 will be described. As shown in FIG. 24, this fuel cell system is generally composed of the fuel cell stack 1, a fuel supply system 2 including a hydrogen loading alloy 21, an air supply system 3, a hydrogen supply system 4, and a load system 5.

In the fuel supply system 2, hydrogen emitted by the hydrogen loading alloy 21 through a hydrogen supply pass 20 is delivered to a hydrogen gas pass S3 of each unit of the fuel cell stack 1. In the hydrogen supply pass 20, a hydrogen regulator 23 is arranged to regulate the pressure of the hydrogen gas emitted from the hydrogen loading alloy 21. A reference numeral 24 designates a hydrogen supply electromagnetic valve, which controls opening and shutting of the hydrogen supply pass 20. A hydrogen gas pressure just before supplied to the fuel cell stack 1 is monitored by a hydrogen pressure sensor 25.

In the fuel supply system 2, the hydrogen gas discharged from the fuel cell stack 1 is emitted to the atmosphere via a hydrogen discharge pass 27. The hydrogen discharge pass 27 is provided with a check valve 28 and an electromagnetic valve 29. The check valve 28 prevents air from entering the anode of the fuel cell stack 1 via the hydrogen discharge pass 27. The electromagnetic valve 29 is intermittently driven to attempt complete combustion of the hydrogen.

The air supply system 3 supplies air from the atmosphere to the air pass S1 of the fuel cell stack 1 and discharges air exhausted from the fuel cell stack 1 through the water condenser 46. A fan 31 is provided in the air supply pass 30 to deliver air from the atmosphere to the air manihold 34. The air flows into the air supply pass S1 of the fuel cell stack 1 from the manihold 34 to supply oxygen to the cathode 12. The moisture of the air discharged from the fuel cell stack 1 is condensed and collected in the water condenser 46, and the air is emitted to the atmosphere. A temperature discharged from the fuel cell stack 1 is monitored by the exhaust temperature sensor 37.

The cooling water delivered from the cooling pass S2 of the cooling water to the air supply pass S1 reaches the water condenser 46 with a most part thereof keeping a liquid state, and then delivered to the tank 40 to be collected. A part of the water supplied is evaporated, and then condensed and collected in the water condenser 46. It is considered that vapor included in exhaust air may include what arises from reaction water caused by a power generation reaction of the fuel cell stack 1.

The water supply system 4 send by pressure the water in the tank 40 with the pump 41 to the cooling water supply pass L6 of each fuel cell unit via the pipe 40a, and a part of the cooling water supplied is collected from the discharge pass L7 of each fuel cell unit to the tank 40 via the pipe 40b. In each fuel cell unit, the water supplied from the through-holes 143 to the air supply pass S1 is collected in the water condenser 46 and then returned to the tank 40. It is of course impossible to completely close the water supply system 4, so that a water level of the tank 40 is monitored by the water level sensor 48 and when the water level exceeds a predetermined threshold value, water is resupplied from outside. In order to prevent the water in the tank 40 from freezing in winter season, a heater 49 and a freeze preventing electromagnetic valve 40c are installed in the tank 40. An electromagnetic valve 40d is installed in a pipe connecting between the water condenser 46 and the tank 40, so as to prevent the water in the tank 40 from evaporating. Output of the pump 41 is controlled depending on temperature of exhaust air detected by the exhaust temperature sensor 37 to adjust the amount of the cooling water circulating so as to maintain temperature of the fuel cell stack 1 at a desired temperature.

The load system 5 takes out output of the fuel cell stack 1 to the outside to drive a load of a motor 52 or the like. This load system 5 is provided with a relay 53 for switching and a secondary battery 54 as a subsidiary output source, and a diode 55 for rectification intervenes between the secondary battery 54 and the relay 53. Note that the output of the fuel cell stack 1 itself is always monitored by a voltage sensor 56. Based on this monitor result, a not-shown control circuit controls closing and opening of the hydrogen discharge electromagnetic valve 29.

According to a structure described in claim 1 of the present invention, since an air pass and a cooling space are separately provided on a front and back side of a separator, it can be avoided to provide a special separator or a cooling plate in the separator, which prevents to have a thick separator. In addition, the separator is directly cooled by latent heat at a cooling space side, which can cool more efficiently than cooling with the cooling plate and enables uniform cooling. In a conventional system where air and cooling water are simultaneously supplied, it is concerned that droplets of the cooling water adhere to the cathode surface, which causes water to clog up in the air pass. Therefore, a cross section area of the air pass is broadened, especially height of a groove constituting the air pass is made high, which is an obstacle to make a small and weight-saving fuel cell. However, in the present invention, water is supplied in the air pass in a vapor state, so that air supplied to an electrode is not disturbed by the droplets even if the cross section area of the air pass is small. Thereby, such a structure enables to make a thin separator, which further achieves a small and weight-saving fuel cell stack.

Further, according to a structure described in claim 2, arranging the air pass and the cooling space adjacent to each other allows to make a cooling effect uniform. Since the air pass and the cooling space are not stacked in a layered direction in the separator, the separator is made thin, which achieves a small and weight-saving fuel cell stack layered with the electric cell.

According to a structure described in claim 3, the separator is made of a pressed metal plate, which facilitates manufacturing and also lowers a material cost. It can make the separator thinner. Further, making the separator thin allows to decrease heat capacity so that an effect of the latent heat cooling is more directly applied on the unit cell and cooling can be performed efficiently. Further for the same reasons, it is also possible to shorten time for warming and save energy for warming.

Next, according to a structure described in claim 4, a hydrophilic process is applied on a wall surface surrounding the cooling space, so that a high temperature portion on the wall surface in the cooling space can be easily wetted, which further enhances a cooling effect of latent heat cooling. In addition, water is not easily clogged up in the pass so as not to disturb air supply.

According to a structure described in claim 5, air supplied in the cooling space and being in a vapor saturated state by the latent heat cooling is supplied to the air pass via the through-hole, which inhibits removing liquid water from the cathode in the air pass so as to fully maintain wetting of the electrode.

According to a structure described in claim 6, since a smaller amount of the liquid water is supplied to the air pass than to the cooling space, even if a large amount of the liquid water is supplied to the fuel cell for cooling, air supply is rarely disturbed by the liquid water covering the cathode.

According to a structure described in claim 7, a cooling system can be simplified with a method of mixing water for cooling in the air supplied to the fuel cell, which achieves a small and weight-saving fuel cell system as a whole.

According to a structure described in claim 8, even with a metal separator with a low heat conductivity, such a structure that the air and the water are supplied to both of the air pass and the cooling space enables to obtain a full cooling effect.

According to a structure described in claim 9, the separator is made of a pressed metal plate, which facilitates manufacturing and also lowers a material cost. It can make the separator thinner. Further, making the separator thin allows to decrease heat capacity so that an effect of the latent heat cooling is more directly applied on the unit cell and cooling can be performed efficiently.

According to a structure described in claim 10, even with a metal separator with a low heat conductivity, such a structure that the air and the water are supplied to both of the air pass and the cooling space enables to obtain a full cooling effect.

According to a structure described in claim 11, since the latent heat cooling is performed on both the cooling space and the air pass, heat generated on the unit cell can be fully cooled and the liquid water is not removed from the cathode.

According to a structure described in claim 12, air and water, which are supplied to the air pass and the cooling space, are simultaneously supplied, so that the cooling system can be simplified and a small and weight-saving fuel cell system can be achieved.

According to a structure described in claim 13, even with a metal separator with a low heat conductivity, such a structure that the air and the water are supplied to both of the air pass and the cooling space enables to obtain a full cooling effect.

According to a structure described in claim 14, the separator is made of a pressed metal plate, which facilitates manufacturing and also lowers a material cost. It can make the separator thinner. Further, making the separator thin allows to decrease heat capacity so that an effect of the latent heat cooling is more directly applied on the unit cell and cooling can be performed efficiently.

According to a structure described in claim 15, even with a metal separator with a low heat conductivity, such a structure that the air and the water are supplied to both of the air pass and the cooling space enables to obtain a full cooling effect.

## Claims

1. A fuel cell comprising: a plurality of unit cells each including an anode and a cathode; and a plurality of separators each arranged between said unit cells,
wherein said separator comprises an air pass on a front face side thereof at least being in contact with said cathode of the unit cell and a cooling space supplied with air and water on a back face side thereof, said air pass and said cooling space communicating through a through-hole passing through said separator so as to cool the unit cells by latent heat of water evaporated in said cooling space and to supply said air pass with vapor through said through-hole.

2. A fuel cell according to claim 1, wherein said cooling space is included within said separator and arranged adjacent to said air pass.

3. A fuel cell according to claim 1 or 2, wherein said separator is made of a pressed plate material, a space between lifted portions protruded from a plate surface serves as said air pass, and a space on a back side of the lifted portions serves as said cooling space.

4. A fuel cell according to claim 1, 2, or 3, wherein a wall surface surrounding said cooling space of said separator is applied with a hydrophilic process at least on a portion thereof.

5. A fuel cell according to claim 1, 2, 3, or 4, wherein said air pass has a pass, one end of which is closed, and is communicated with said cooling space by the through-holes along the way from the closing end to an open end thereof.

6. A fuel cell according to claim 1, 2, 3, 4, or 5, wherein said separator has a structure in which a smaller amount of liquid water is supplied to said air pass than to said cooling space.

7. A fuel cell according to any one of claims 1 to 6, wherein said cooling space on an inlet side is connected to a manifold supplying air and water, while an outlet side thereof serves as an open pass.

8. A fuel cell comprising: a plurality of unit cells each including an anode and a cathode; and a plurality of separators each arranged between said unit cells,
wherein said separator comprises an air pass on a front face side thereof at least being in contact with a cathode of the unit cell and a cooling space on a back face side thereof, and air and water are supplied to said air pass and said cooling space to cool the unit cell in said cooling space and said air pass by latent heat generated when the supplied water evaporates.

9. A fuel cell according to claim 7 or 8, wherein said air pass and said cooling space on inlet sides thereof are connected to the same manifold and are supplied with air and water from the manifold

10. A fuel cell according to any one of claims 1 to 9, said separator is made of metal.

11. A fuel cell according to any one of claims 1 to 10, wherein said separator is structured by having a plurality of plate materials abut on each other on at least a part thereof, while said cooling space is structured by an opening caused between the abutting portions.

12. A fuel cell according to claim 10 or 11, said separator is made of stainless steel.

## Patentansprüche

1. Brennstoffzelle mit mehreren Einheitszellen, die jeweils eine Anode und eine Kathode aufweisen, und mehreren Separatoren, die jeweils zwischen den Einheitszellen angeordnet sind,
wobei der Separator einen Luftdurchlass an einer vorderen Seitenfläche, die zumindest mit der Kathode der Einheitszelle in Kontakt steht, und einen Kühlraum aufweist, der an einer rückwärtigen Seitenfläche mit Luft und Wasser versorgt wird, wobei der Luftdurchlass und der Kühlraum über ein Durchgangsloch, das durch den Separator verläuft, miteinander in Verbindung stehen, um die Einheitszellen durch Latenzwärme von Wasser zu kühlen, das in dem Kühlraum verdampft, und um den Luftdurchlass mit Dampf über das Durchgangsloch zu versorgen.

2. Brennstoffzelle nach Anspruch 1, wobei der Kühlraum im Separator vorgesehen und benachbart zum Luftdurchlass angeordnet ist.

3. Brennstoffzelle nach Anspruch 1 oder 2, wobei der Separator aus einem Pressplattenmaterial hergestellt ist, wobei ein Raum zwischen angehobenen Abschnitten, die von einer Plattenoberfläche vorstehen, als der Luftdurchlass dient und ein Raum auf der Rückseite der angehobenen Abschnitte als der Kühlraum dient.

4. Brennstoffzelle nach Anspruch 1, 2 oder 3, wobei eine Wandfläche, die den Kühlraum des Separators umgibt, zumindest an einem Abschnitt davon durch einen hydrophilen Prozess aufgebracht ist.

5. Brennstoffzelle nach Anspruch 1, 2, 3 oder 4, wobei der Luftdurchlass einen Durchlass aufweist, dessen eines Ende geschlossen ist und der mit dem Kühlraum über die Durchgangslöcher entlang der Strecke von dem Abschlussende zu einem offenen Ende davon in Verbindung steht.

6. Brennstoffzelle nach Anspruch 1, 2, 3, 4 oder 5, wobei der Separator eine Struktur aufweist, in der eine kleinere Menge von flüssigem Wasser dem Luftdurchlass als dem Kühlraum zugeführt wird.

7. Brennstoffzelle nach einem der Ansprüche 1 bis 6, wobei der Kühlraum an einer Einlassseite mit einem Verteiler zum Zuführen von Luft und Wasser verbunden ist, während eine Auslassseite davon als ein offener Durchlass dient.

8. Brennstoffzelle mit mehreren Einheitszellen, die jeweils eine Anode und eine Kathode aufweisen, und mehreren Separatoren, die jeweils zwischen den Einheitszellen angeordnet sind,
wobei der Separator einen Luftdurchlass an einer vorderen Seitenfläche davon, die zumindest mit einer Kathode der Einheitszelle in Berührung steht, und einen Kühlraum an einer rückwärtigen Seitenfläche davon aufweist, wobei Luft und Wasser dem Luftdurchlass und dem Kühlraum zugeführt werden, um die Einheitszelle in dem Kühlraum und dem Luftdurchlass durch Latenzwärme zu kühlen, die erzeugt wird, wenn das zugeführte Wasser verdampft.

9. Brennstoffzelle nach Anspruch 7 oder 8, wobei der Luftdurchlass und der Kühlraum an Einlassseiten davon mit dem gleichen Verteiler verbunden sind und mit Luft und Wasser vom Verteiler versorgt werden.

10. Brennstoffzelle nach einem der Ansprüche 1 bis 9, wobei der Separator aus Metall hergestellt ist.

11. Brennstoffzelle nach einem der Ansprüche 1 bis 10, wobei der Separator durch mehrere Plattenmaterialelemente aufgebaut ist, die zumindest an einem Teil davon aneinander anliegen, wobei der Kühlraum eine Öffnung aufweist, die zwischen den aneinanderstoßenden Abschnitten gebildet wird.

12. Brennstoffzelle nach Anspruch 10 oder 11, wobei der Separator aus Edelstahl hergestellt ist.

## Revendications

1. Pile à combustible comprenant: une pluralité de cellules unitaires comprenant chacune une anode et une cathode ; et une pluralité de séparateurs agencés chacun entre lesdites cellules unitaires,
dans laquelle ledit séparateur comprend un passage d'air sur un côté de face avant de celui-ci étant au moins en contact avec ladite cathode de la cellule unitaire et un espace de refroidissement alimenté en air et en eau sur un côté de face arrière de celui-ci, ledit passage d'air et ledit espace de refroidissement communiquant à travers un trou traversant passant à travers ledit séparateur de manière à refroidir les cellules unitaires par de la chaleur latente d'eau évaporée dans ledit espace de refroidissement et pour alimenter ledit passage d'air en vapeur à travers ledit trou traversant.

2. Pile à combustible selon la revendication 1, dans laquelle ledit espace de refroidissement est inclus dans ledit séparateur et agencé adjacent audit passage d'air.

3. Pile à combustible selon la revendication 1 ou 2, dans laquelle ledit séparateur est constitué d'un matériau de plaque comprimé, un espace entre des portions soulevées en saillie-d'une surface de plaque sert dudit passage d'air et un espace sur un côté arrière des portions soulevées sert dudit espace de refroidissement.

4. Pile à combustible selon la revendication 1, 2 ou 3, dans laquelle une surface de paroi entourant ledit espace de refroidissement dudit séparateur est appliquée avec un procédé hydrophile sur au moins une partie de celui-ci.

5. Pile à combustible selon la revendication 1, 2, 3 ou 4, dans laquelle ledit passage d'air a un passage, dont une extrémité est fermée, et est en communication avec ledit espace de refroidissement par des trous traversants le long du chemin de l'extrémité fermée à une extrémité ouverte de celui-ci.

6. Pile à combustible selon la revendication 1, 2, 3, 4 ou 5, dans laquelle ledit séparateur a une structure dans laquelle une quantité inférieure d'eau liquide est fournie audit passage d'air par rapport audit espace de refroidissement.

7. Pile à combustible selon l'une quelconque des revendications 1 à 6, dans laquelle ledit espace de refroidissement sur un côté d'entrée est relié à un collecteur fournissant de l'air et de l'eau, tandis que son côté de sortie sert de passage ouvert.

8. Pile à combustible comprenant : une pluralité de cellules unitaires comprenant chacune une anode et une cathode ; et une pluralité de séparateurs agencés chacun entre lesdites cellules unitaires,
dans laquelle ledit séparateur comprend un passage d'air sur un côté de face avant de celui-ci étant au moins en contact avec une cathode de la cellule unitaire et un espace de refroidissement sur son côté de face arrière, puis de l'air et de l'eau sont fournis audit passage d'air et audit espace de refroidissement pour refroidir la cellule unitaire dans ledit espace de refroidissement et ledit passage d'air par de la chaleur latente générée lorsque l'eau fournie s'évapore.

9. Pile à combustible selon la revendication 7 ou 8, dans laquelle ledit passage d'air et ledit espace de refroidissement sur ses côtés d'entrée sont reliés au même collecteur et sont alimentés en air et en eau à partir du collecteur.

10. Pile à combustible selon l'une quelconque des revendications 1 à 9, ledit séparateur est constitué de métal.

11. Pile à combustible selon l'une quelconque des revendications 1 à 10, dans laquelle ledit séparateur est structuré en ayant une pluralité de matériaux de plaque en butée les uns contre les autres sur au moins une partie de ceux-ci, tandis que ledit espace de refroidissement est structuré par une ouverture provoquée entre les portions en about.

12. Pile à combustible selon la revendication 10 ou 11, ledit séparateur est constitué d'acier inoxydable.
